# EUROPEAN PATENT APPLICATION

(11) **EP 4 138 186 A1**
(43) Date of publication of application: **22.02.2023**
(21) Application number: 22749948.0
(22) Date of filing: 27.01.2022
(51) Int. Cl.: H01M 50/178, H01M 50/184, H01M 50/186, H01M 50/129

(54) **SECONDARY BATTERY, MANUFACTURING METHOD THEREFOR, AND BATTERY PACK**

(30) Priority: 04.02.2021 KR 20210016401; 25.01.2022 KR 20220010697
(71) Applicant: LG Energy Solution, Ltd., Seoul 07335 (KR)
(72) Inventor: LEE, Yoon Beom, Daejeon 34122 (KR); YOON, Jun Ho, Daejeon 34122 (KR); HAN, Chang Min, Daejeon 34122 (KR)
(74) Representative: Goddar, Heinz J.
(86) International application number: PCT/KR2022/001450
(87) International publication number: WO 2022/169197

(57) **Abstract**

The present invention is provided with a secondary battery comprising: an electrode assembly to which an electrode lead is bonded; a pouch configured to accommodate the electrode assembly and provided with a sealing part; and a lead film configured to seal a portion between the sealing part and the electrode lead, wherein a pattern means configured to pattern the sealing part and the lead film so as to increase in bonding area between the sealing part and the lead film is provided on a bonding portion between the sealing part and the lead film. Therefore, bonding force and sealing force between the lead film and the sealing part may increase.

## Description

### CROSS-REFERENCE TO RELATED APPLICATION

The present application claims the benefit of the priority of Korean Patent Application Nos. 10-2021-0016401, filed on February 04, 2021, and 10-2022-0010697, filed on January 25, 2022, which are hereby incorporated by reference in their entirety.

### TECHNICAL FIELD

The present invention relates to a secondary battery, a method for manufacturing the same, and a battery pack, and more particularly, to a secondary battery, in which bonding force between a lead film and a pouch is improved, a method for manufacturing the same, and a battery pack.

### BACKGROUND ART

In general, secondary batteries refer to chargeable and dischargeable, unlike primary batteries that are not chargeable. The secondary batteries are being widely used for mobile phones, notebook computers, and camcorders, electric vehicles, and the like.

Such a secondary battery is classified into a can type secondary battery in which an electrode assembly is built in a metal can and a pouch type secondary battery in which an electrode assembly is built in a pouch. The can type secondary battery comprises an electrode assembly in which electrodes and separators are alternately stacked, a can accommodating the electrode assembly, and a cap assembly mounted in an opening of the can. In addition, the pouch-type secondary battery comprises an electrode assembly in which electrodes and separators are alternately stacked, a pouch accommodating the electrode assembly, and an electrode lead connected to an electrode assembly and lead out of the pouch.

In the pouch-type secondary battery, a lead film is provided between a sealing part of the pouch and the electrode lead, and the lead film allows bonding force and sealing force between the sealing part of the pouch and the electrode lead to increase.

However, the pouch-type secondary battery according to the related art has a problem in that venting occurs between the lead film and the sealing part of the pouch when an internal pressure increases. Thus, it is necessary to increase in bonding force and sealing force between the lead film and the sealing part of the pouch.

### DISCLOSURE OF THE INVENTION

### TECHNICAL PROBLEM

An object of the present invention is to provide a secondary battery, in which a bonded portion between a lead film and a sealing part of a pouch are patterned to maximize a contact area between the lead film and the sealing part of the pouch, thereby allowing bonding force and sealing force between the lead film and the sealing part of the pouch to increase, a method for manufacturing the same, and a battery pack.

### TECHNICAL SOLUTION

A secondary battery according to the present invention for achieving the above object comprises: an electrode assembly to which an electrode lead is bonded; a pouch comprising an accommodation part configured to communicate the electrode assembly in a state, in which a front end of the electrode lead is withdrawn to the outside, and a sealing part configured to seal the accommodation part; and a lead film provided on the electrode lead disposed on the sealing part of the pouch and bonded to the sealing part to seal a portion between the sealing part and the electrode lead, wherein a pattern means configured to pattern the sealing part and the lead film so as to increase in bonding area between the sealing part and the lead film is provided on the bonding portion between the sealing part and the lead film, wherein the pattern means comprises a lead pattern layer provided on a surface of the lead film and a sealing pattern layer provided on a surface of the sealing part and bonded to be in surface contact with the lead pattern layer, the lead pattern layer comprises a lead concave part and a lead convex part, which are formed to extend in a width direction of the electrode lead, and the sealing pattern layer comprises a sealing concave part and a sealing convex part, which are formed to extend in the width direction of the electrode lead and are bonded to be in surface contact with the lead concave part and the lead convex part.

The lead concave part and the lead convex part may be alternately formed in a longitudinal direction of the electrode lead, and the sealing concave part and the sealing convex part may be alternately formed in the longitudinal direction of the electrode lead.

The lead convex part alternately formed in the longitudinal direction of the electrode lead may have a width greater than that of the lead concave part when using the lead film as a reference plane, the sealing convex part alternately formed in the longitudinal direction of the electrode lead may have a width smaller than that of the sealing concave part when using the lead film as the reference plane, and the sealing convex part and the lead concave part may be bonded to be in surface contact with each other, and the sealing concave part and the lead convex part may be bonded to be in surface contact with each other.

The lead pattern layer and the sealing pattern layer may be formed only on surfaces of the lead film and the sealing part, on which a surface of the electrode lead is disposed.

The sealing part may have a structure in which a resin layer, a metal layer, and an insulating layer are sequentially stacked, and in the sealing pattern layer, the entire resin layer, metal layer, and insulating layer may be patterned into the sealing concave part and the sealing convex part.

The sealing part may have a structure in which a resin layer, a metal layer, and an insulating layer are sequentially stacked, and in the sealing pattern layer, only the resin layer bonded to the lead film may be patterned into the sealing concave part and the sealing convex part.

The lead convex part and the lead concave part, which are alternately formed in the longitudinal direction of the electrode lead, may have a wavy shape, and the sealing convex part and the sealing concave part, which are alternately formed in the longitudinal direction of the electrode lead, may have a wavy shape.

The lead pattern layer may be provided to be attached to a surface of the lead film, and the sealing pattern layer may be provided to be attached to a surface of the sealing part, which corresponds to the lead pattern layer.

Each of the lead pattern layer and the sealing pattern layer may be made of the same material as the lead film.

A method for manufacturing a secondary battery according to the present invention comprises: a preparation process of preparing an electrode assembly, to which an electrode lead is bonded, and a pouch comprising an accommodation part and a sealing part; an accommodation process of accommodating the electrode assembly into the pouch in a state in which a front end of the electrode lead is withdrawn to the outside of the pouch; an attachment process of attaching a lead film to the electrode lead disposed on the sealing part of the pouch; a patterning process of compressing a surface of the lead film to form a lead pattern layer on which a lead concave part and a lead convex part are patterned; and a sealing process of thermally fusing the sealing part of the pouch to seal the accommodation part, wherein a sealing pattern layer, on which a sealing concave part and a sealing convex part are patterned to be in surface contact with the lead pattern layer, is formed on the sealing part of the pouch, on which the lead pattern layer is disposed, so that a bonding area between the sealing part and the lead film increases, wherein, in the patterning process, the lead concave part and the lead convex part are formed to extend in a width direction of the electrode lead, and in the sealing process, the sealing concave part and the sealing convex part are formed to extend in the width direction of the electrode lead.

In the patterning process, the lead concave part and the lead convex part may be alternately formed in a longitudinal direction of the electrode lead, and in the sealing process, the sealing concave part and the sealing convex part may be alternately formed in the longitudinal direction of the electrode lead.

In the patterning process, the lead convex part and the lead concave part, which are alternately formed in the longitudinal direction of the electrode lead, may have a wavy shape, and in the sealing process, the sealing convex part and the sealing concave part, which are alternately formed in the longitudinal direction of the electrode lead, may have a wavy shape.

In the sealing process, when the sealing part on which the lead pattern layer is disposed is thermally fused, a portion of the sealing part may be inserted into the lead concave part of the lead pattern layer to form a sealing convex part, and a remaining portion of the sealing part may be recessed by the lead convex part of the lead pattern layer to form a sealing concave part.

### ADVANTAGEOUS EFFECTS

In the secondary battery according to the present invention, the bonded portion between the lead film and the sealing part of the pouch may be patterned to increase in contact area between the lead film and the sealing part of the pouch, and as a result, the bonding force and sealing force between the lead film and the sealing part of the pouch may increase to prevent the venting from occurring.

### BRIEF DESCRIPTION OF THE DRAWINGS

FIG. 1 is a perspective view of a secondary battery according to a first embodiment of the present invention.
FIG. 2 is a plan view of the secondary battery according to the first embodiment of the present invention.
FIG. 3 is an enlarged view of a portion "A" illustrated in FIG. 2.
FIG. 4 is a cross-sectional view taken along line B-B of FIG. 2.
FIG. 5 is a partial enlarged view of FIG. 4.
FIG. 6 is a flowchart illustrating a method for manufacturing the second battery according to the first embodiment of the present invention.
FIG. 7 is a perspective view illustrating a preparation process, an accommodation process, an attachment process, and a patterning process in a method for manufacturing a secondary battery according to a first embodiment of the present invention.
FIG. 8 is a cross-sectional view illustrating a sealing process in the method for manufacturing the secondary battery according to a first embodiment of the present invention.
FIG. 9 is a cross-sectional view of a secondary battery according to a second embodiment of the present invention.
FIG. 10 is a schematic front view of a battery pack according to a third embodiment of the present invention.
FIG. 11 is a perspective view illustrating a secondary battery according to a fourth embodiment of the present invention.

### MODE FOR CARRYING OUT THE INVENTION

Hereinafter, embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein. In the drawings, anything unnecessary for describing the present invention will be omitted for clarity, and also like reference numerals in the drawings denote like elements.

### [Secondary battery according to first embodiment of the present invention]

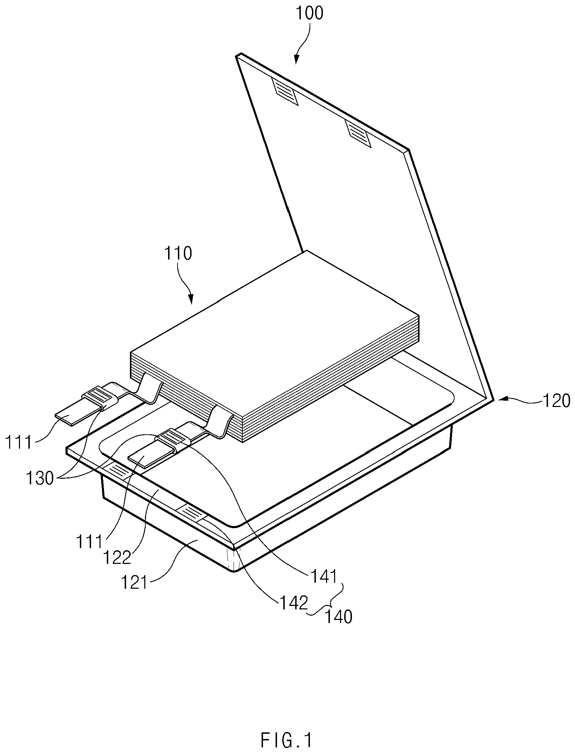

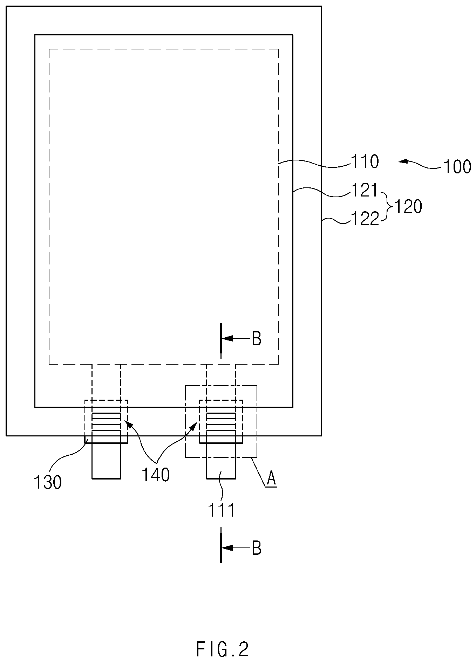

As illustrated in FIGS. 1 to 5, a secondary battery 100 according to a first embodiment of the present invention comprises an electrode assembly 110 to which an electrode lead 111 is bonded, a pouch 120 accommodating the electrode assembly 110, and a lead film 130 configured to increases in sealing force between the pouch 120 and the electrode lead 111.

### Electrode assembly

The electrode assembly has a structure in which separators and electrodes are alternately stacked, and each of the electrodes comprises an electrode tab. The electrode lead 111 is bonded to the electrode tab.

The electrode comprises a positive electrode and a negative electrode, and the electrode tab comprises a positive electrode tab provided on the positive electrode and a negative electrode tab provided on the negative electrode. In addition, the electrode lead 111 comprises a positive electrode lead bonded to the positive electrode tab and a negative electrode lead bonded to the negative electrode tab.

### Pouch

The pouch 120 has a structure in which an upper case and a lower case are bonded to each other to correspond to each other or a structure in which a lower case and a cover are bonded to each other. An embodiment of the present invention will be described based on the structure in which the lower case and the cover are bonded to each other.

Here, an accommodation part 121 accommodating the electrode assembly is formed at a center of the pouch 120, and a sealing part 122 sealing the accommodation part 121 is formed on an edge of the accommodation part 121.

That is, the pouch 120 comprises the accommodation part 121 accommodating the electrode assembly 110 in a state in which a front end of the electrode lead 111 is withdrawn to the outside and the sealing part 122 formed along an edge surface of the accommodation part 121 to seal the accommodation part 121.

### Lead film

The lead film 130 is provided on the electrode lead 111 disposed on the sealing part 122 of the pouch 120. Particularly, the lead film 130 is attached to surround a circumference of the electrode lead 111. Thus, the lead film 130 seals a portion between the sealing part 122 and the electrode lead 111 while being bonded to the sealing part 122.

The secondary battery 100 according to the related art has a problem in that, when a pressure within the pouch increases, a gap between the lead film and the sealing part of the pouch is vented first.

In order to solve such a problem, the secondary battery according to the first embodiment of the present invention may have a structure that increases in bonding area between the lead film and the sealing part of the pouch, and thus, the bonding force and sealing force between the lead film and the sealing part may increase to prevent the venting from occurring.

That is, in the secondary battery 100 according to the first embodiment of the present invention, the bonding portion between the lead film 130 and the sealing part 122 of the pouch 120 may be patterned to increase in bonding area between the lead film 130 and the sealing part 122. As a result, the bonding force and sealing force between the lead film 130 and the sealing part 122 may increase to prevent the venting from occurring between the lead film 130 and the sealing part 122 of the pouch 120.

For example, in the secondary battery 100 according to the first embodiment of the present invention, a pattern means 140 that increases in bonding area between the sealing part 122 and the lead film 130 by patterning the sealing part 122 and the lead film 130 is provided at the bonding portion between the sealing part 122 and the lead film 130 (that is, sealing portion between the sealing part 122 and the lead film).

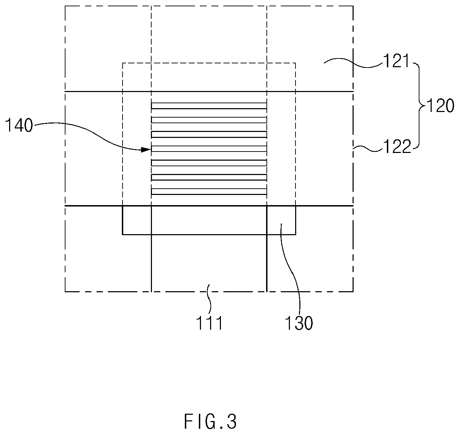

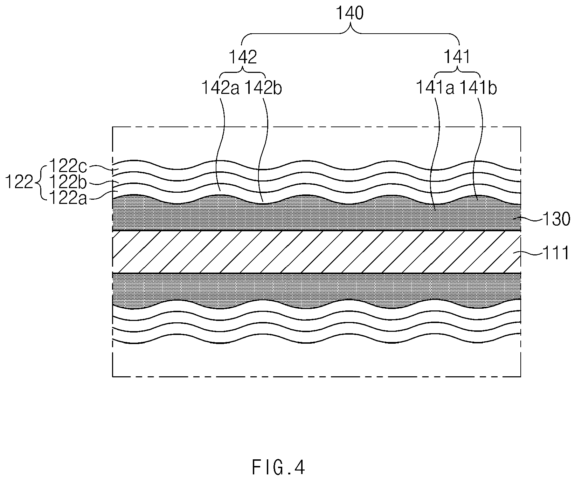

The pattern means 140 comprises a lead pattern layer 141 provided on surfaces (top and bottom surfaces of the lead film when viewed in FIG. 3) of the lead film 130 and a sealing pattern layer 142 provided on a surface (a surface of the sealing part, which is in close contact with the lead pattern layer when viewed in FIG. 4) of the sealing part 122 so as to be in close contact with the lead pattern layer 141.

Here, the lead pattern layer 141 comprises a lead concave part 141a and a lead convex part 141b, which extend in a width direction (a left and right direction when viewed in FIG. 3) of the electrode lead 111. In addition, the sealing pattern layer 142 comprises a sealing concave part 142a and a sealing convex part 142b, which extend in the width direction of the electrode lead 111 and are bonded to be in surface contact with the lead concave part 141a and the lead convex part 141b. That is, the lead concave part 141a and the sealing convex part 142b are bonded to be in surface contact with each other, and the lead convex part 141b and the sealing concave part 142 are bonded to be in surface contact with each other. Thus, the bonding force and sealing force between the lead film and the sealing part may increase.

Particularly, the lead concave part 141a and the lead convex part 141b are alternately formed in a longitudinal direction of the electrode lead, and the sealing concave part 142a and the sealing convex part 142b are alternately formed in the longitudinal direction of the electrode lead. Thus, the lead film and the sealing part may be sealed in multiple stages.

In addition, the lead concave parts 141 and the lead convex part 141b, which are alternately formed in the longitudinal direction of the electrode lead 111, have a wavy shape, and the sealing concave part 142a and the sealing convex part 142b, which are alternately formed in the longitudinal direction of the electrode lead, have a wavy shape. Due to such a structure, the bonding force and sealing force between the lead pattern layer and the sealing pattern layer may increase.

In the pattern means 140 having the structure as described above, the lead pattern layer 141 formed on the surface of the lead film 130 and the sealing pattern layer 142 formed on the surface of the sealing part 122 may be bonded to be in surface contact with each other to increase in bonding area between the lead film 130 and the sealing part 122, and thus, the bonding force and sealing force between the lead film 130 and the sealing part 122 may significantly increase to prevent the venting from occurring.

The concave parts and the convex parts of the lead pattern layer 141 and the sealing pattern layer 142 may be alternately formed in the longitudinal direction (a vertical direction when viewed in FIG. 3) of the electrode lead 111, and thus, the pressure generated inside the pouch 120 may be blocked in multiple stages to significantly prevent the venting from occurring.

The lead pattern layer 141 and the sealing pattern layer 142 are formed only on the surfaces of the lead film 130 and the sealing part 122, on which the surface of the electrode lead 111 is disposed. That is, the sealing part 122 of the pouch and the lead film 130 may be weakened in bonding force as a thickness increases by the electrode lead 111, and thus, the lead pattern layer 141 and the sealing pattern layer 142 may be formed only on the sealing part 122 and the lead film 130 of the pouch, in which the bonding force is weakened, to prevent the venting from occurring and improve simplification of the process.

The sealing part 122 has a structure in which a resin layer 122a, a metal layer 122b, and an insulating layer 122c are sequentially stacked. Here, the sealing pattern layer 142 has a structure in which the entire resin layer 122a, metal layer 122b, and insulating layer 122c are patterned into the sealing concave part 142a and the sealing convex part 142b.

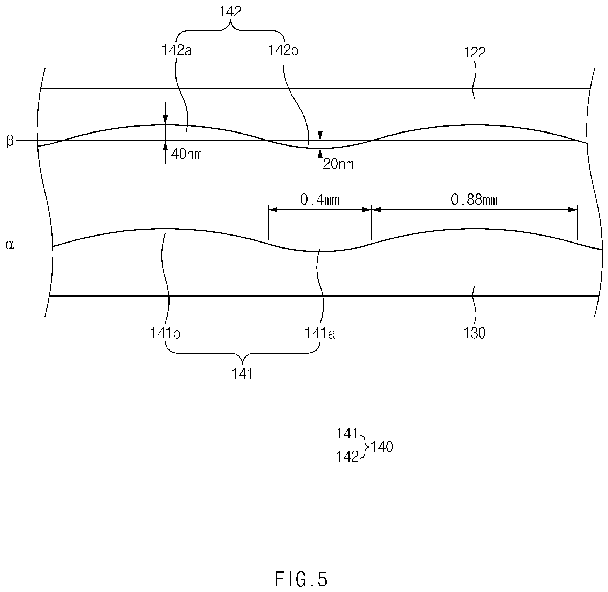

Referring to FIG. 4, a width of the lead convex part 141b, which is alternately formed in the longitudinal direction of the electrode lead 111 (the left and right direction of the lead convex part when viewed in FIG. 5) is greater than that of the lead concave part 141a when using the surface of the lead film 130 as a reference plane α. For example, the lead convex part 141b disposed on the reference plane α has a width of 0.8 mm, and the lead convex part 141a disposed on the reference plane α has a width of 0.4 mm that is less than that of the lead convex part 141b. In addition, the lead convex part 141b protruding with respect to the reference plane α has a height of 40 um, and the lead concave part 141a recessed with respect to the reference plane α has a height of 20 um that is less than that of the lead convex part 141b.

Also, the sealing convex part 142b alternately formed in the longitudinal direction of the electrode lead 111 has a width less than that of the sealing concave part 142a when using the surface of the lead film 130 as a reference plane β. For example, the sealing convex part 142b disposed on the reference plane β has a width of 0.4 mm, and the sealing concave part 142a disposed on the reference plane β has a width of 0.8 mm. Also, the sealing convex part 142b protruding with respect to the reference plane β has a height of 20 um, and the sealing concave part 142a recessed with respect to the reference plane β has a depth of 40 µm.

Thus, the sealing convex part 142b and the lead concave part 141a are bonded to be in surface contact with each other, and the sealing concave part 142a and the lead convex part 141b are bonded to be in surface contact with each other.

Therefore, the secondary battery 100 according to the first embodiment of the present invention may comprise the pattern means 140 for patterning the bonding portion between the lead film and the sealing part. As a result, the bonding area between the sealing part 122 and the lead film 130 may increase to prevent the venting from occurring between the sealing part 122 and the lead film 130.

Hereinafter, a method for manufacturing the secondary battery according to the first embodiment of the present invention will be described.

### [Method for manufacturing secondary battery according to first embodiment of the present invention]

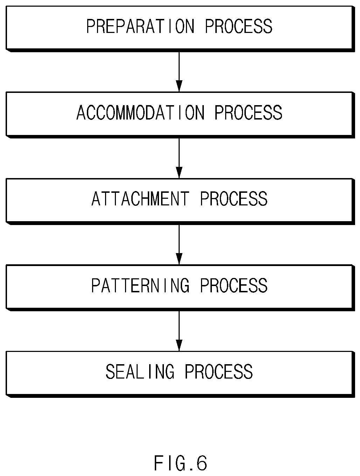

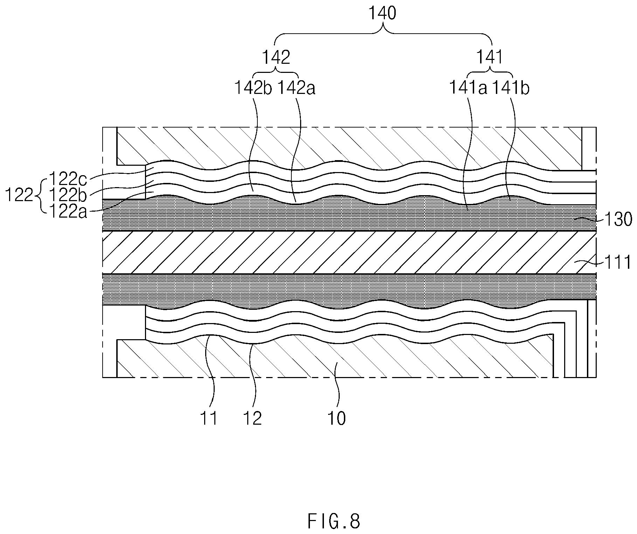

A method for manufacturing the secondary battery according to the first embodiment of the present invention comprises a preparation process, an accommodation process, an attachment process, a patterning process, and a sealing process, as illustrated in FIGS. 6 to 8.

### Preparation process

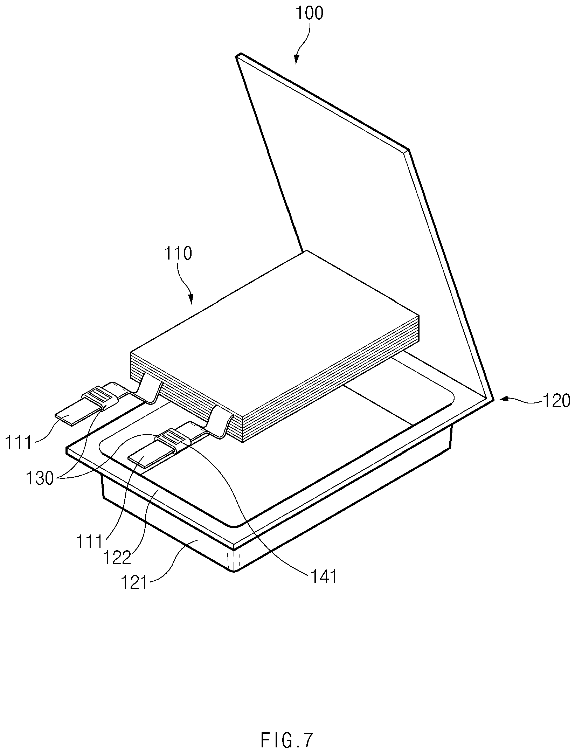

Referring to FIG. 7, in the preparation process, an electrode assembly 110, to which an electrode lead 111 is bonded, and a pouch 120 provided with an accommodation part 121 and a sealing part 122 are prepared.

The electrode assembly 110 has a structure in which separators and electrodes are alternately stacked, each of the electrodes comprises an electrode tab, and an electrode lead 111 is bonded to the electrode tab.

The pouch 120 comprises the accommodation part 121 accommodating the electrode assembly at a center thereof and the sealing part 122 formed along an edge of the accommodation part 121 to seal the accommodation part 121.

### Accommodation process

Referring to FIG. 7, in the accommodation process, the electrode assembly 110 is accommodated in the accommodation part 121 of the pouch 120 in a state in which a front end of the electrode lead 111 is withdrawn to the outside of the pouch 120.

### Attachment process

Referring to FIG. 7, in the attachment process, a lead film 130 is attached to a surface of the electrode lead 111 disposed on the sealing part 122 of the pouch 120. In this case, the lead film 130 is attached to surround a circumference of the electrode lead 111.

### Patterning process

Referring to FIG. 7, in the patterning process, the surface of the lead film 130 attached to the electrode lead 111 is compressed using a press device having a concave groove and a concave protrusion. Then, a lead pattern layer 141 on which a lead concave part 141a and a lead convex part 141b are patterned is formed on the surface of the lead film 130. That is, the lead concave part 141a is formed on the surface of the lead film 130 on which the concave protrusion is disposed, and the lead convex part 141b is formed on the surface of the lead film 130 in which the concave groove is disposed.

Here, in the patterning process, the lead concave part 141a and the lead convex part 141b are formed to extend in a width direction of the electrode lead. In addition, the lead concave part 141a and the lead convex part 141b are patterned to be alternately formed in the longitudinal direction of the electrode lead 111. Particularly, each of the lead concave part 141a and the lead convex part 141b forming the lead pattern layer 141 has a wavy shape.

In the patterning process, both ends of the lead pattern layer 141 form the lead concave part 141a to increase in bonding force.

In the patterning process, the lead pattern layer 141 is formed only on the surface of the lead film on which the surface of the electrode lead is disposed. This reinforces bonding force by forming the lead pattern layer only on the surface of the lead film corresponding to the surface of the electrode lead because the bonding force of the portion of the lead film, at which the electrode lead is disposed is weak.

### Sealing process

In the sealing process, the sealing part 122 of the pouch 120 is thermally fused to seal the accommodation part 121. Here, the sealing part 122 of the pouch 120 on which the lead pattern layer 141 is disposed is deformed by supporting force of the lead pattern layer 141 to form a sealing pattern layer 142 on which the sealing concave part 142a and the sealing convex part 142b are patterned.

That is, a sealing convex part is formed on a surface of the sealing part in which the lead concave part is disposed, and a sealing concave part is formed on a surface of the sealing part on which the lead convex part is disposed. Thus, a bonding area between the sealing part 122 and the lead film 130 may increase.

The sealing part 122 of the pouch 120 on which the lead film 130 is disposed may be compressed using the press device 10 on which the concave groove 12 and the concave protrusion 11 are formed. Thus, the sealing pattern layer 142 in which the sealing concave part and the sealing convex part, which are in surface contact with the lead pattern layer 141, are patterned may be formed.

That is to say, in the sealing process, when the sealing part on which the lead pattern layer is disposed is thermally fused, a portion of the sealing part is inserted into the lead concave part of the lead pattern layer to form a sealing convex part 142b, and a remaining portion of the sealing part is recessed by the lead convex part of the lead pattern layer to form a sealing concave part 142a.

In the sealing process, the sealing concave part 142a and the sealing convex part 142b are formed to extend in the width direction of the electrode lead 111, and the sealing concave part 142a and the sealing convex part 142b are alternately formed in the longitudinal direction of the electrode lead 111.

Particularly, in the sealing process, each of the sealing convex part and the sealing concave part alternately formed in the longitudinal direction of the electrode lead has a wavy shape.

When the above-described processes are completed, the secondary battery 100 comprising the pattern means 140 may be manufactured.

Hereinafter, in descriptions of another embodiment of the present invention, constituents having the same function and structure as the above-mentioned embodiment have been given the same reference numeral in the drawings, and thus duplicated description will be omitted.

### [Secondary battery according to second embodiment of the present invention]

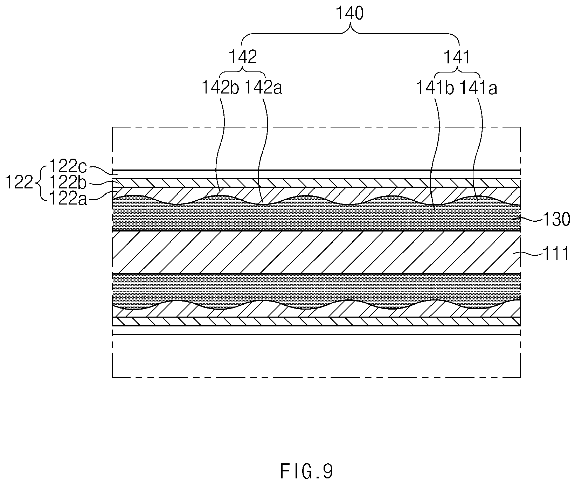

As illustrated in FIG. 9, in a secondary battery 100 according to a second embodiment of the present invention, a pouch 120 comprises an accommodation part 121 and a sealing part 122, and the sealing part 122 has a structure in which a resin layer 122a, a metal layer 122b, and an insulating layer 122c are sequentially stacked.

Here, in a sealing pattern layer 142 formed on the sealing part 122, a sealing concave part 142a and a sealing convex part 142b are patterned only on the resin layer 122a bonded to a lead film 130. That is, the metal layer 122b and the insulating layer 122c have a horizontal plane, and the sealing pattern layer 142 in which the sealing concave parts 142a and the sealing convex parts 142b are patterned is formed on the resin layer 122a.

Therefore, although the secondary battery 100 according to the second embodiment of the present invention looks like the normal secondary battery from the outside, bonding force may increase while a bonding area between the lead film and the sealing part increases at the inside of the secondary batter.

### [Electrode pack according to third embodiment of the present invention]

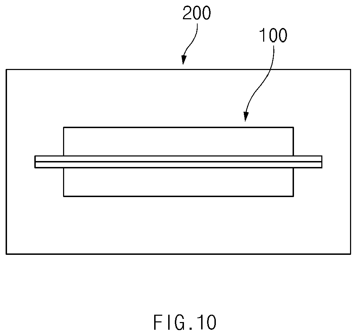

As illustrated in FIG. 10, a battery pack according to a third embodiment of the present invention has a structure comprising at least one secondary battery 100 according to the first embodiment of the present invention.

That is, the battery pack according to the third embodiment of the present invention comprises a secondary battery 100 and a pack case 200 accommodating the secondary battery 100.

Here, the secondary battery 100 may have the same configuration and function as the secondary battery 100 according to the first embodiment, and thus, duplicated descriptions will be omitted.

Therefore, the battery pack according to the third embodiment of the present invention may significantly improve safety by comprising the secondary battery having increasing bonding force.

### [Secondary battery according to fourth embodiment of the present invention]

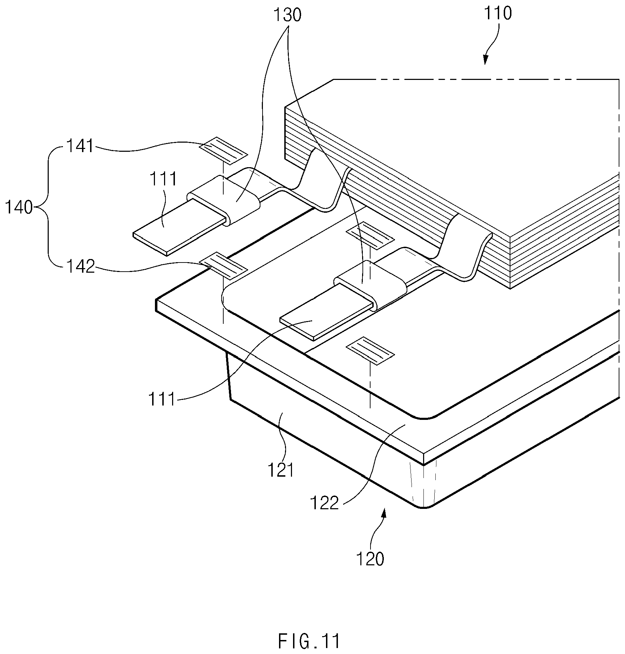

As illustrated in FIG. 11, a secondary battery according to a fourth embodiment of the present invention comprises an electrode assembly 110, to which an electrode lead 111 is bonded, and a pouch 120 comprising an accommodation part 121 and a sealing part 122.

In addition, a bonding portion of the sealing part 122 and the lead film 130 comprises a pattern means 140 for an increase of bonding force, and the pattern means comprises a lead pattern layer 141 provided on the lead film 130 and a sealing pattern layer 142 provided on the sealing part 122.

The lead pattern layer 141 comprises a lead concave part 141a and a lead convex part 11b, and the sealing pattern layer 142 comprises a sealing concave part 142a and a sealing convex part 142b.

Here, the lead pattern layer 141 may be attached to a surface of the lead film 130. That is, after the lead pattern layer 141 is manufactured separately from the lead film 130, the lead pattern layer 141 is attached to the surface of the lead film through thermal fusion or an adhesive. Thus, the shapes of the lead concave part and the lead convex part provided in the lead pattern layer 141 may be clearly implemented, and as a result, easiness of the manufacturing may be improved.

In addition, the sealing pattern layer 142 may be attached to a surface of the sealing part 122. That is, after the sealing pattern layer 142 is manufactured separately from the sealing part 122, the sealing pattern layer 142 is attached to the surface of the sealing part 122 by thermal fusion or an adhesive. Thus, the shapes of the sealing concave part and the sealing convex part provided in the sealing pattern layer 142 may be clearly implemented, and as a result, easiness of the manufacturing may be improved.

Particularly, the lead pattern layer 141 and the sealing pattern layer 142 may be made of the same material as the lead film. Thus, it is easy to manufacture the lead pattern layer 141 and the sealing pattern layer 142, and the bonding force between the lead pattern layer and the lead film or between the sealing pattern layer and the sealing part may increase.

The lead pattern layer 141 and the sealing pattern layer 142 may be made of a material having strength greater than that of each of the lead film and the resin layer of the sealing part. Thus, when the lead pattern layer 141 and the sealing pattern layer 142 are bonded to each other, the shapes of the lead pattern layer 141 and the sealing pattern layer 142 may be prevented from being deformed.

Accordingly, the scope of the present invention is defined by the appended claims more than the foregoing description and the exemplary embodiments described therein. Various modifications made within the meaning of an equivalent of the claims of the invention and within the claims are to be regarded to be in the scope of the present invention.

### [Description of the Symbols]

100: Secondary battery
110: Electrode assembly
111: Electrode lead
120: Pouch
121: Accommodation part
122: Sealing member
130: Lead film
140: Pattern means
141: Lead pattern layer
141a: Lead concave part
141b: Lead convex part
142: Sealing pattern layer
142a: Sealing concave part
142b: Sealing convex part

## Claims

1. A secondary battery comprising:
an electrode assembly to which an electrode lead is bonded;
a pouch comprising an accommodation part configured to communicate the electrode assembly in a state, in which a front end of the electrode lead is withdrawn to the outside, and a sealing part configured to seal the accommodation part; and
a lead film provided on the electrode lead disposed on the sealing part of the pouch and bonded to the sealing part to seal a portion between the sealing part and the electrode lead,
wherein a pattern means configured to pattern the sealing part and the lead film so as to increase in bonding area between the sealing part and the lead film is provided on the bonding portion between the sealing part and the lead film,
wherein the pattern means comprises a lead pattern layer provided on a surface of the lead film and a sealing pattern layer provided on a surface of the sealing part and bonded to be in surface contact with the lead pattern layer,
the lead pattern layer comprises a lead concave part and a lead convex part, which are formed to extend in a width direction of the electrode lead, and
the sealing pattern layer comprises a sealing concave part and a sealing convex part, which are formed to extend in the width direction of the electrode lead and are bonded to be in surface contact with the lead concave part and the lead convex part.

2. The secondary battery of claim 1, wherein the lead concave part and the lead convex part are alternately formed in a longitudinal direction of the electrode lead, and
the sealing concave part and the sealing convex part are alternately formed in the longitudinal direction of the electrode lead.

3. The secondary battery of claim 2, wherein the lead convex part alternately formed in the longitudinal direction of the electrode lead has a width greater than that of the lead concave part when using the lead film as a reference plane,
the sealing convex part alternately formed in the longitudinal direction of the electrode lead has a width smaller than that of the sealing concave part when using the lead film as the reference plane, and
the sealing convex part and the lead concave part are bonded to be in surface contact with each other, and the sealing concave part and the lead convex part are bonded to be in surface contact with each other.

4. The secondary battery of claim 2, wherein the lead pattern layer and the sealing pattern layer are formed only on surfaces of the lead film and the sealing part, on which a surface of the electrode lead is disposed.

5. The secondary battery of claim 1, wherein the sealing part has a structure in which a resin layer, a metal layer, and an insulating layer are sequentially stacked, and
in the sealing pattern layer, the entire resin layer, metal layer, and insulating layer are patterned into the sealing concave part and the sealing convex part.

6. The secondary battery of claim 1, wherein the sealing part has a structure in which a resin layer, a metal layer, and an insulating layer are sequentially stacked, and
in the sealing pattern layer, only the resin layer bonded to the lead film is patterned into the sealing concave part and the sealing convex part.

7. The secondary battery of claim 2, wherein the lead convex part and the lead concave part, which are alternately formed in the longitudinal direction of the electrode lead, has a wavy shape, and
the sealing convex part and the sealing concave part, which are alternately formed in the longitudinal direction of the electrode lead, has a wavy shape.

8. The secondary battery of claim 1, wherein the lead pattern layer is provided to be attached to a surface of the lead film, and
the sealing pattern layer is provided to be attached to a surface of the sealing part, which corresponds to the lead pattern layer.

9. The secondary battery of claim 8, wherein each of the lead pattern layer and the sealing pattern layer is made of the same material as the lead film.

10. A method for manufacturing a secondary battery, the method comprising:
a preparation process of preparing an electrode assembly, to which an electrode lead is bonded, and a pouch comprising an accommodation part and a sealing part;
an accommodation process of accommodating the electrode assembly into the pouch in a state in which a front end of the electrode lead is withdrawn to the outside of the pouch;
an attachment process of attaching a lead film to the electrode lead disposed on the sealing part of the pouch;
a patterning process of compressing a surface of the lead film to form a lead pattern layer on which a lead concave part and a lead convex part are patterned; and
a sealing process of thermally fusing the sealing part of the pouch to seal the accommodation part, wherein a sealing pattern layer, on which a sealing concave part and a sealing convex part are patterned to be in surface contact with the lead pattern layer, is formed on the sealing part of the pouch, on which the lead pattern layer is disposed, so that a bonding area between the sealing part and the lead film increases,
wherein, in the patterning process, the lead concave part and the lead convex part are formed to extend in a width direction of the electrode lead, and
in the sealing process, the sealing concave part and the sealing convex part are formed to extend in the width direction of the electrode lead.

11. The method of claim 10, wherein, in the patterning process, the lead concave part and the lead convex part are alternately formed in a longitudinal direction of the electrode lead, and
in the sealing process, the sealing concave part and the sealing convex part are alternately formed in the longitudinal direction of the electrode lead.

12. The method of claim 11, wherein, in the patterning process, the lead convex part and the lead concave part, which are alternately formed in the longitudinal direction of the electrode lead, has a wavy shape, and
in the sealing process, the sealing convex part and the sealing concave part, which are alternately formed in the longitudinal direction of the electrode lead, has a wavy shape.

13. The method of claim 10, wherein, in the sealing process, when the sealing part on which the lead pattern layer is disposed is thermally fused, a portion of the sealing part is inserted into the lead concave part of the lead pattern layer to form a sealing convex part, and a remaining portion of the sealing part is recessed by the lead convex part of the lead pattern layer to form a sealing concave part.

14. A battery pack comprising the secondary battery of claim 1.
